(19) Europäisches Patentamt
European Patent Office
Office européen des brevets

(11) **EP 2 989 862 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(21) Anmeldenummer: **14732063.4**

(22) Anmeldetag: **26.04.2014**

(51) Int Cl.:
*H05B 33/08* (2006.01)     *H02M 3/335* (2006.01)
*H02K 41/00* (2006.01)     *H02M 7/48* (2007.01)

(86) Internationale Anmeldenummer:
**PCT/AT2014/000093**

(87) Internationale Veröffentlichungsnummer:
**WO 2014/172735 (30.10.2014 Gazette 2014/44)**

(54) **KONSTANTSTRÖM-KONVERTER FÜR BELEUCHTUNGSEINRICHTUNGEN**

CONSTANT CURRENT CONVERTER FOR LIGHTING DEVICES

CONVERTISSEUR DE COURANT CONSTANT POUR APPAREILS D'ÉCLAIRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2013 DE 102013207675**

(43) Veröffentlichungstag der Anmeldung:
**02.03.2016 Patentblatt 2016/09**

(73) Patentinhaber: **Tridonic GmbH & Co KG**
**6851 Dornbirn (AT)**

(72) Erfinder:
• **LECKER, Simon**
**6850 Dornbirn (AT)**
• **BELL, Wayne**
**Durham DH7 7RS (GB)**
• **DALBY, Paul**
**Middlesbrough**
**Cleveland TS5 7LP (GB)**
• **MAKWANA, Deepak**
**Newcastle Upon Tyne NE4 8UB (GB)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A2- 2 252 133      EP-A2- 2 741 409**
**WO-A1-2011/008635      WO-A1-2013/152368**
**WO-A2-2013/152367      WO-A2-2014/094014**
**DE-A1- 10 102 352      DE-A1-102010 031 244**
**US-A1- 2008 112 193      US-A1- 2009 059 632**
**US-A1- 2011 080 102**

• **ANONYMOUS: "AN-9729. LED Application Design Guide Using Half-Bridge LLC Resonant Converter for 100W Street Lighting", INTERNET CITATION, 16. November 2012 (2012-11-16), Seiten 1-14, XP002707759, Gefunden im Internet: URL:http://www.fairchildsemi.com/an/AN/AN-9729.pdf [gefunden am 2013-07-30]**

EP 2 989 862 B1

**Beschreibung**

Die vorliegende Erfindung betrifft insbesondere einen Konverter für den Betrieb wenigstens eines Leuchtmittels, vorzugsweise wenigstens einer LED.

LED-Konverter zum Betreiben von LEDs aufweisend einen Resonanzwandler, wie z.B. einen LLC Konverter, sind aus dem Stand der Technik grundsätzlich bekannt. Insbesondere kann ein LED-Konverter von einer elektrischen Versorgungsquelle versorgt werden, welche den LED-Konverter mit Gleichstrom bzw. gleichgerichtetem Wechselstrom versorgt.

Der Resonanzwandler überträgt dann Strom über eine galvanische Sperre bzw. galvanische Barriere von einer Primärseite auf eine Sekundärseite der galvanischen Sperre zur Versorgung einer LED-Strecke mit Strom.

Es ist bekannt, einen solchen Resonanzwandler bzw. LLC Konverter als Konstantstrom-Konverter zu betreiben. Hierzu kann ein Regelkreis zur Regelung seines Ausgangsstroms bzw. des LED-Stroms vorgesehen sein. Z.B. kann der LED-Strom auf der Sekundärseite der galvanischen Sperre gemessen werden. Diese Messung wird über einen Optokoppler an einen primärseitigen Steuerkreis zurückgeführt, um entsprechend den LED-Konverter zu steuern.

Es besteht indessen das Bestreben, dass ein vorgegebener Soll-Wert für den LED-Strom rein durch Messen eines primärseitigen Stromes des LED-Konverters garantiert werden kann. Um eine sekundärseitige Messung des LED-Stroms zu vermeiden, kann dann primärseitig ein Strom des Resonanzwandlers gemessen werden, um entsprechend den Resonanzwandler zu takten bzw. steuern. Bei dieser Regelung wird für jeden einzustellenden Soll-Wert für den Strom durch die LED-Strecke ein Soll-Wert für den primärseitigen Strom abgelegt.

Indessen lässt dieser Ansatz unberücksichtigt, dass es keinen strengen Zusammenhang zwischen dem primärseitigen Strom und dem LED-Strom gibt, sondern dass vielmehr dieser Zusammenhang eine weitere Einflussgröße hat, nämlich die LED-Spannung. Veränderungen der LED-Spannung können sich ergeben, beispielsweise durch starke Temperaturveränderungen, aber auch durch eine Veränderung der LED-Strecke und insbesondere durch eine Veränderung der Anzahl und/oder der Art der angeschlossenen LEDs.

Die Veröffentlichung "AN-9729 LED Application Design Guide Using Half-Bridge LLC Resonant Converter for 100W Street Lighting, Internet-Seite Fairschild 16.11.2012, Seiten 1-14, XP002707759" offenbart einen resonanten Halbbrückenkonverter (LLC) für eine 100W-Strassenbeleuchtung.

Die DE 2010 031 244 A1 offenbart ein modulares LED-Beleuchtungssystem.

US 2011/0080102 A1 offenbart einen Konstantstrom-LED-Treiber.

WO2011/008635 A1 offenbart eine adaptive Dimmer-Erfassung und - Steuerung für eine LED-Lampe.

EP 2 252 133 A2 offenbart eine Schaltungsanordnung zum Betreiben einer Niederdruck-Gasentladungslampe.

US 2008/0112193 A1 offenbart eine Einschaltzeitdauer-Steuerung für einen Flyback-Konverter im Konstantstrommodus.

US 2009/0059632 A1 offenbart ein System zur Steuerung einer Strombegrenzung mit primärseitiger Erfassung unter Verwendung einer hybriden PWM und PFM-Steuerung.

EP 2 741409 A2 offenbart eine primärseitige Ausgangsstromregelung.

WO 2013/152368 A1 ist Stand der Technik unter Art. 54 (3) EPÜ und betrifft ein Verfahren zum Betreiben eines LLC-Resonanzwandlers für ein Leuchtmittel.

WO2013/152367 A2 ist Stand der Technik unter Art. 54 (3) EPÜ und betrifft einen Wandler für ein Leuchtmittel.

WO 2014/152367 A2 ist Stand der Technik unter Art. 54 (3) EPÜ und betrifft einen primärseitig gesteuerten Konstantstromkonverter für Leuchtmittel.

Der Erfindung liegt das technische Problem zugrunde, eine Schaltung bzw. einen LED-Konverter zum Betreiben einer LED-Strecke und ein entsprechendes Betriebsverfahren anzugeben, bei denen die primärseitige Regelung verbessert werden kann.

Dieses Problem wird nunmehr durch die Kombination der Merkmale der unabhängigen Ansprüche gelöst. Die abhängigen Ansprüche bilden den zentralen Gedanken der Erfindung vorteilhaft weiter.

Grundgedanke der Erfindung ist es, den Soll-Wert für den primärseitigen Strom abhängig von der gemessenen LED-Spannung zu modifizieren. Um die Art dieser Modifikation zu kennen, wird eine Testmessung durchgeführt, um diesen Zusammenhang zwischen primärseitigen Strom und LED-Spannung - d.h. um die Abhängigkeit des primärseitigen Stroms von der LED-Spannung zur Erreichung eines gleichbleibenden LED-Stroms - in Erfahrung zu bringen.

Gemäß einem ersten Aspekt der Erfindung ist vorgesehen ein LED-Konverter zur Versorgung einer mindestens eine LED aufweisenden LED-Strecke mit Strom. Der LED-Konverter weist auf

- einen Resonanzwandler mit einem mindestens einen Schalter aufweisenden Schaltregler,
- eine galvanischen Sperre, deren Primärseite von dem Schaltregler versorgt wird und deren Sekundärseite so angeordnet ist, dass sie der LED-Strecke direkt oder indirekt Strom zuführt,
- eine primärseitig angeordnete Steuereinheit zum Erfassen einer primärseitigen elektrischen Kenngröße.

Zum Erzeugen eines gewünschten LED-Stroms, d.h. eines gewünschten Stroms durch die LED-Strecke, regelt die Steuereinheit durch Steuerung des Schaltreglers die erfasste primärseitige elektrische Kenngröße auf einen Soll-Wert. Der Soll-Wert für die erfasste primärseitige elektrische Kenngröße ist abhängig von der erfassten LED-Spannung.

Zum Regeln des der LED-Strecke zugeführten Stroms steuert die Steuereinheit den Schaltregler abhängig von der erfassten primärseitigen elektrischen Kenngröße. Ein Soll-Wert für die erfasste primärseitige elektrische Kenngröße wird abhängig von der erfassten LED-Spannung modifiziert.

Vorzugsweise kann für einen gewünschten LED-Strom der entsprechende Soll-Wert für die primärseitige elektrische Kenngröße abgespeichert sein.

Vorzugsweise kann die Abhängigkeit der primärseitigen elektrischen Kenngröße von der LED-Spannung zur Erreichung eines gleichbleibenden, gewünschten LED-Stroms abgespeichert sein.

Vorzugsweise kann die Abhängigkeit der primärseitigen elektrischen Kenngröße von der LED-Spannung in einer vorzugsweise primärseitig vorgesehenen Look-Up-Tabelle bzw. Nachschlagtabelle abgespeichert sein oder gemäß einer Funktion hinterlegt sein.

Vorzugsweise kann der Soll-Wert für die erfasste primärseitige elektrische Kenngröße zusätzlich abhängig von mindestens einer weiteren Größe, wie beispielsweise der Temperatur, sein.

Vorzugsweise kann diese zusätzliche Abhängigkeit ebenfalls in der Look-Up-Tabelle abgespeichert sein oder gemäß der Funktion hinterlegt sein.

Vorzugsweise kann für unterschiedliche einstellbare LED-Stromwerte der entsprechende Verlauf bzw. Kurvenverlauf der primärseitigen elektrischen Kenngröße in Abhängigkeit von der LED-Spannung abgelegt sein.

Vorzugsweise kann für mehrere einstellbare LED-Stromwerte ein einziger Verlauf der primärseitigen elektrischen

Kenngröße in Abhängigkeit von der LED-Spannung abgelegt sein. Für jeden dieser mehreren einstellbaren LED-Stromwerte können Verschiebungswerte, die zum Ableiten eines Kompensationswerts für die primärseitige elektrische Kenngröße, gespeichert sein.

Gemäß einem weiteren Aspekt der Erfindung ist vorgesehen ein LED-Konverter zur Versorgung einer mindestens eine LED aufweisenden LED-Strecke mit Strom, aufweisend:

- einen Resonanzwandler mit einem mindestens einen Schalter aufweisenden Schaltregler,
- eine galvanischen Sperre, deren Primärseite von dem Schaltregler versorgt wird und deren Sekundärseite so angeordnet ist, dass sie der LED-Strecke direkt oder indirekt Strom zuführt,
- eine primärseitig angeordnete Steuereinheit zum Erfassen einer primärseitigen elektrischen Kenngröße.

Zum Erzeugen eines gewünschten LED-Stroms, d.h. eines gewünschten Stroms durch die LED-Strecke, regelt die Steuereinheit durch Steuerung des Schaltreglers die erfasste primärseitige elektrische Kenngröße auf einen Soll-Wert. Der Soll-Wert für die erfasste primärseitige elektrische Kenngröße ist abhängig von der erfassten Temperatur.

Die oben erwähnten Nebenaspekte betreffend die LED-Spannung sind auch hier in Zusammenhang mit der Temperatur anwendbar.

Vorzugsweise kann die primärseitige elektrische Kenngröße ein primärseitiger Strom, insbesondere der Strom durch die Primärseite der galvanischen Sperre, sein.

Vorzugsweise kann die LED-Spannung sekundärseitig gemessen werden und über die galvanische Sperre zur Primärseite, insbesondere zur Steuereinheit, übertragen werden.

Vorzugsweise kann die Übertragung der sekundärseitig gemessenen LED-Spannung zur Primärseite über einen Optokoppler erfolgen.

Vorzugsweise kann sekundärseitig eine Schaltung, insbesondere in Form einer integrierten Schaltung wie z.B. ASIC oder Microcontroller, zur Durchführung der Messung der LED-Spannung und zur Steuerung des Optokopplers vorgesehen sein.

Vorzugsweise kann die Übertragung der sekundärseitig gemessenen LED-Spannung zur Primärseite gemäß einem digitalen Protokoll über einen Optokoppler erfolgen.

Vorzugsweise kann die LED-Spannung primärseitig indirekt von der Steuereinheit erfasst werden, insbesondere durch die Messung von mindestens einer weiteren elektrischen Kenngröße.

Vorzugsweise kann die LED-Spannung indirekt durch Messung einer primärseitigen Spannung, insbesondere durch Messung der an der Primärseite der galvanischen Sperre anliegenden Spannung, von der Steuereinheit erfasst werden.

Gemäß einem weiteren Aspekt der Erfindung ist vorgesehen ein Verfahren zur Versorgung einer mindestens eine LED aufweisenden LED-Strecke mit Strom ausgehend von einem LED-Konverter aufweisend:

- einen Resonanzwandler mit einem mindestens einen Schalter aufweisenden Schaltregler,
- eine galvanischen Sperre, deren Primärseite von dem Schaltregler versorgt wird und deren Sekundärseite so angeordnet ist, dass sie der LED-Strecke direkt oder indirekt Strom zuführt,

Eine primärseitige elektrische Kenngröße wird erfasst wird. Zum Erzeugen eines gewünschten LED-Stroms, d.h. eines gewünschten Stroms durch die LED-Strecke, wird durch Steuerung des Schaltreglers die erfasste primärseitige elektrische Kenngröße auf einen Soll-Wert geregelt. Der Soll-Wert für die erfasste primärseitige elektrische Kenngröße ist von der erfassten LED-Spannung abhängig.

Alle oben erwähnte Aspekte bzw. Nebenaspekte betreffend den LED-Konverter sind auch hier im Zusammenhang mit einem erfindungsgemäßen Verfahren anwendbar.

Gemäß einem weiteren Aspekt der Erfindung ist vorgesehen ein Computersoftware-Programmprodukt, das ein derartiges Verfahren implementiert, wenn es in einer Recheneinrichtung läuft.

Gemäß einem weiteren Aspekt der Erfindung ist vorgesehen eine Integrierte Schaltung, insbesondere ASIC oder Microcontroller oder eine Hybridversion davon, die zur Implementierung eines derartigen Verfahrens nach dem Anspruch 17 ausgebildet ist.

Gemäß einem weiteren Aspekt der Erfindung ist vorgesehen eine Leuchte, aufweisend eine LED-Strecke und einen oben beschriebenen LED-Konverter zur Versorgung der LED-Strecke mit Strom.

Nachfolgend wird die Erfindung außerdem im Hinblick auf die Figuren beschrieben.

Fig. 1 zeigt schematisch den Aufbau einer erfindungsgemäßen Schaltung zur Versorgung einer LED-Strecke,

Fig. 2 zeigt ein erfindungsgemäßes Ausführungsbeispiel eines LED-Konverters zur Versorgung einer LED-Strecke,

Fig. 3 zeigt ein erfindungsgemäßes alternatives Ausführungsbeispiel eines LED-Konverters zur Versorgung einer LED-Strecke,

Fig. 4 zeigt den Verlauf von verschieden elektrischen Größen des LED-Konverters,

Fig. 5 zeigt den Verlauf eines erfindungsgemäßen berechneten Werts in Abhängigkeit von der LED-Spannung,

Fig. 7 zeigt beispielhaft Kompensationswerte gemäß der vorliegenden Erfindung, und

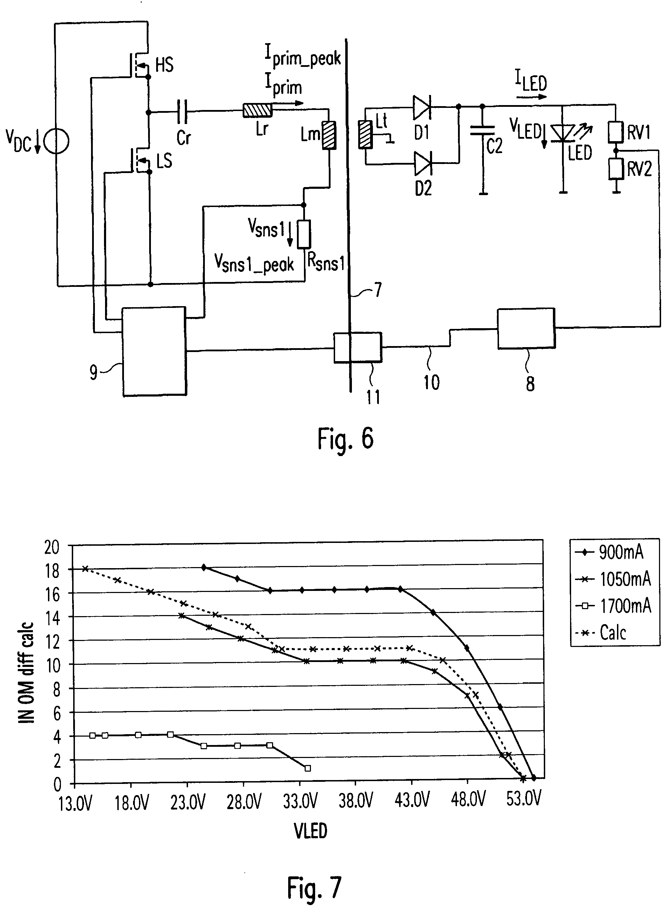

Fig. 6 zeigt ein weiteres erfindungsgemäßes Ausführungsbeispiel eines LED-Konverters zur Versorgung einer LED-Strecke.

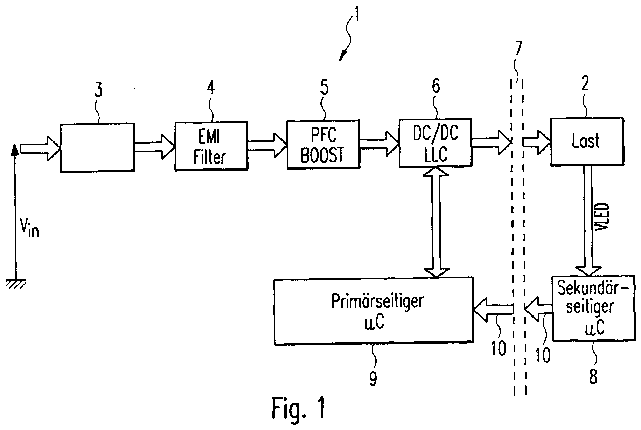

Fig. 1 zeigt in schematischer Form den Aufbau einer Schaltung 1 zum Betreiben einer Last 2. Insbesondere ist der Aufbau eines LED-Konverters zum Betreiben einer LED-Strecke aufweisend eine oder mehrere LEDs gezeigt. Die LEDs der LED-Strecke können in Serie, in parallel oder gemäß einer Serien/parallel-Schaltung angeordnet sein.

Die Schaltung wird vorzugsweise von einer Eingangsspannung Vin z.B. in Form einer Wechselspannung bzw. Netzspannung gespeist. Die Eingangsspannung wird eingangsseitig vorzugsweise einem Gleichrichter 3 und einem EMI-Filter 4 (electromagnetic interference) zum Filtern von elektromagnetischen Störungen zugeführt. Alternativ kann die Eingangsspannung auch eine Gleichspannung bzw. eine konstante Spannung wie z.B. eine Batteriespannung sein, wobei in diesem Fall der Gleichrichter 3 und der EMI-Filter 4 nicht notwendig sind.

Daraufhin wird die vorzugsweise gefilterte Spannung einer Leistungsfaktorkorrektur-Schaltung (PFC) 5 zugeführt, die einen Resonanzwandler 6 versorgt, beispielsweise einen Reihen-Resonanzwandler, insbesondere einen LLC Konverter.

Ausgangsseitig ist der Resonanzwandler 6 mit einer galvanischen Sperre 7, z.B. einer SELV Sperre (Sicherheitskleinspannungssperre), verbunden. Diese galvanische Sperre 7 ist z.B. in Form eines Transformators, der an den Resonanzwandler angeschlossen oder ein Teil dessen ist, ausgestaltet. Über diese galvanische Sperre 7 bzw. über den Transformator wird Strom von einer Primärseite der galvanischen Sperre auf eine Sekundärseite der galvanischen Sperre übertragen. Diese Übertragung dient dazu, die Last 2 in Form einer Lichtquelle insbesondere in Form einer LED-Strecke mit Strom zu versorgen.

Primärseitig wird eine elektrische Kenngröße wie z.B. ein Strom von einer Steuereinheit 9 erfasst. Insbesondere handelt es sich um einen Strom des Resonanzwandlers 6 bzw. um einen Strom durch die Primärseite der galvanischen Sperre 7. In der primärseitigen Steuereinheit 9 sind weiterhin Soll-Werte für diese elektrische Kenngröße z.B. für den primärseitigen Strom gespeichert: für jeden einzustellenden Soll-Wert für den Strom durch die LED-Strecke ist in der primärseitigen Steuereinheit 9 ein Soll-Wert für die gemessene primärseitige elektrische Kenngröße abgelegt. Durch Steuerung des Resonanzwandlers 6 wird dann die elektrische Kenngröße auf den Soll-Wert geregelt. Der Resonanzwandler 6 ist vorzugsweise als Konstantstrom-Konverter ausgestaltet.

Erfindungsgemäß ist der Soll-Wert für die primärseitige elektrische Kenngröße abhängig von der erfassten LED-Spannung und/oder von anderen Größen wie z.B. die Temperatur der LED-Strecke.

Gemäß einer Ausführungsform der Erfindung wird sekundärseitig entsprechend die an der LED-Strecke anliegende Spannung Vled von einer sekundärseitig angeordneten Steuereinheit 8 gemessen. Die Steuereinheit 8 misst bzw. erfasst diese Spannung Vled und koppelt die Spannung Vled oder eine die gemessene Spannung wiedergebende Größe über einen Optokoppler (nicht gezeigt) an die primärseitige Steuereinheit 9 zurück. Diese Rückkopplung ist in Fig. 1 unter das Referenzeichen 10 gezeigt. Die Datenübertragung über die Rückkopplung 10 kann digital erfolgen, d.h. der Optokoppler wird in diesem Fall gemäß einem digitalen Protokoll von der sekundärseitigen Steuereinheit 8 angesteuert.

Alternativ kann die LED-Spannung Vled auch indirekt erfasst werden. Vorzugsweise wird dann diese LED-Spannung Vled primärseitig erfasst, so dass auf eine Rückführung der Information betreffend die LED-Spannung Vled durch die galvanische Sperre 7 verzichtet werden kann. Vorzugsweise wird zur indirekten Ermittlung der an der LED-Strecke anliegenden Spannung eine primärseitige Spannung herangezogen, wie z.B. eine Spannung aus dem Resonanzwandler 6 bzw. die an der Primärseite der galvanischen Sperre 7 anliegende Spannung.

Zur Regelung der primärseitigen elektrischen Kenngröße abhängig von der Temperatur ist eine Information bezüglich der Temperatur der LEDs bzw. der LED-Strecke notwendig. Diese Information kann sekundärseitig von der sekundärseitigen Steuereinheit 8 ermittelt werden und über den Optokoppler der primärseitigen Steuereinheit 9 zurückgeführt werden. Alternativ kann diese Temperatur primärseitig erfasst werden und der primärseitigen Steuereinheit 9 weitergeleitet werden, so dass eine Rückführung über die galvanische Sperre nicht notwendig ist.

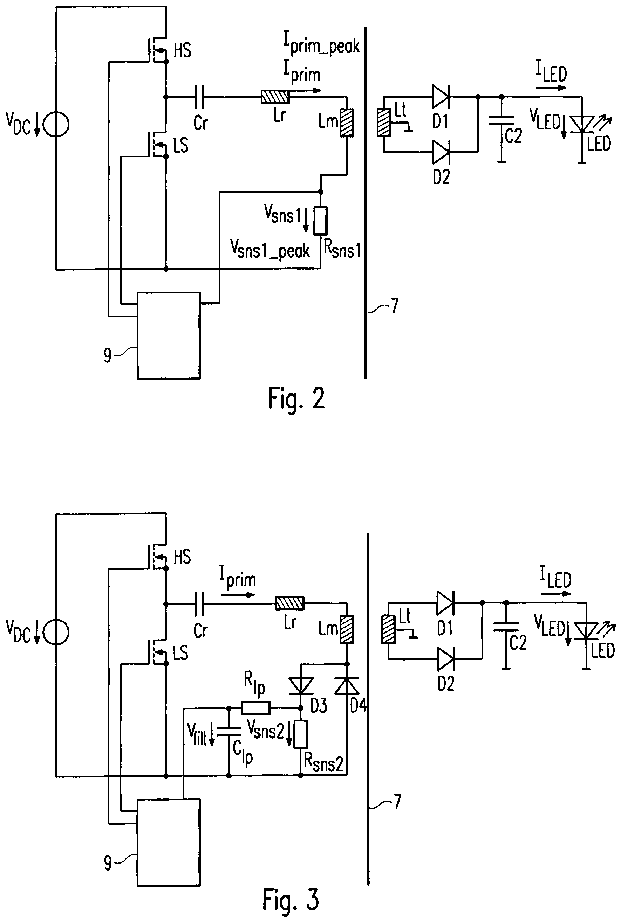

Fig. 2 zeigt ein Ausführungsbeispiel eines LED-Konverters zur Versorgung einer LED-Strecke. In diesem Ausführungsbeispiel wird lediglich die Messung der primärseitigen elektrischen Kenngröße gezeigt, nicht aber die bereits in Fig. 1 gezeigte direkte oder indirekte Messung der LED-Spannung.

Der LED-Konverter umfasst einen Schaltregler, z.B. einen Halbbrücken-Wandler aufweisend einen potentialniedrigeren Schalter LS und einen potentialhöheren Schalter HS. Der Halbbrücken-Wandler wird von einer Spannung VDC versorgt, die z.B. die Ausgangsspannung der in Fig. 1 gezeigten PFC-Schaltung 5 oder alternativ eine Batteriespannung sein kann. Die Schalter der Halbbrücke können als Transistoren, z.B. FET oder MOSFET, ausgestaltet sein.

Am Mittelpunkt der Halbbrücke, d.h. zwischen beiden Schaltern LS, HS, ist ein Resonanzwandler 6 in Form eines LLC Konverters angeschlossen. Der LLC Konverter umfasst eine Reihenschaltung aus einer Kapazität Cr, einer Induktivität Lr und der primärseitigen Induktivität Lm der galvanischen Sperre 7 bzw. des Transformators. Die Kapazität Cr und die Induktivität Lr bilden einen LC Resonanzkreis.

Auf der Sekundärseite ist die sekundärseitige Induktivität Lt des Transformators vorgesehen, die mit der primärseitigen Induktivität Lm gekoppelt ist und die an Dioden D1 und D2 angeschlossen ist. Die LED-Strecke ist an den Kathoden der Dioden D1, D2 angeschlossen. Parallel zur LED-Strecke ist vorzugsweise ein Kondensator C2 vorgesehen.

Ein Messwiderstand Rsns1 ist in Serie zur primärseitigen Induktivität Lm des Transformators geschaltet. Die primärseitige Steuereinheit 9 ist somit in der Lage, eine primärseitige elektrische Kenngröße in Form des Stroms durch den LLC Konverter bzw. durch die Induktivität Lm des Transformators zu erfassen. Die primärseitige Steuereinheit 9 steuert dann die Schalter HS, LS des Resonanzwandlers, insbesondere die Schaltfrequenz dieser Schalter HS, LS, auf der Grundlage des gemessenen Stroms durch den LLC Konverter.

Das Ausführungsbeispiel der Fig. 3 entspricht grundsätzlich dem Ausführungsbeispiel gemäß Fig. 2. Lediglich der Messwiderstand Rsns1 wird durch eine Tiefpass-Schaltung ersetzt. Auf der Primärseite ist eine Reihenschaltung aus einer Diode D3 und einem Messwiderstand Rsns2 in Serie zur primärseitigen Induktivität Lm geschaltet, wobei die Anode der Diode D3 an der Induktivität Lm angeschlossen ist. Parallel zu der Reihenschaltung aus Diode D3 und Messwiderstand Rsns2 ist eine Diode D4 geschaltet, wobei die Kathode der Diode D4 an der primärseitigen Induktivität Lm angeschlossen ist.

Ein Mittelpunkt zwischen Diode D3 und Messwiderstand Rsns2 ist mit einem Tiefpass-Filter aufweisend einen Filterwiderstand Rlp und eine Filterkapazität Clp angeschlossen. Zur Erzeugung eines gewünschten LED-Stroms wird hier auf einen Soll-Wert für den Mittelwert des Einweg-gleichgerichteten Stroms durch die primärseitige Induktivität Lm geregelt.

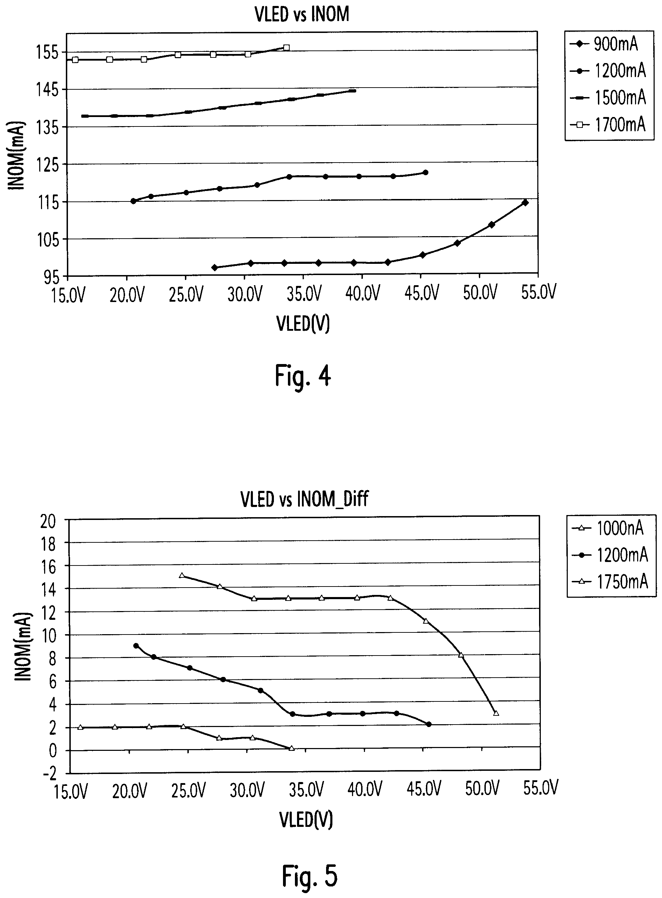

Fig. 4 zeigt den Verlauf von verschieden elektrischen Größen des LED-Konverters. Im Folgenden wird als primärseitige elektrische Kenngröße der primärseitige Strom, d.h. der Strom durch die primärseitige Induktivität Lm, berücksichtigt.

Z.B. zeigt die unterste Kurve den Zusammenhang zwischen dem primärseitigen Strom Inom und der Spannung der LED-Strecke Vled bei einem konstanten LED-Strom von 900 mA. Die unterschiedlichen Kurven betreffen unterschiedliche Soll-Werte für den Strom durch die LED-Strecke von 900 mA bis 1750 mA.

Aus Fig. 4 ergibt sich also der einzustellende Wert des primärseitigen Stroms Inom, um einen gewünschten Strom durch die LED-Strecke zu gewährleisten. Es ist zu sehen, dass es durchaus Bereiche gibt, bei denen sich eine verändernde LED-Spannung keinen Einfluss auf den primärseitigen Strom hat. Ein solcher Bereich entspricht im Wesentlichen dem waagrechten Verlauf der Kurven. Für den LED-Strom Iled = 900 mA erstreckt sich dieser Bereich näherungsweise von 30 V bis 42 V.

Indessen gibt es auch Bereiche, bei denen eine sich verändernde LED-Spannung Vled eine Modifikation für den Soll-Wert Inom für den primärseitigen Strom erfordert. Insbesondere in den ansteigenden Bereichen der gezeigten Kurven ist eine Modifikation des Soll-Werts Inom für den primärseitigen Strom erforderlich.

Die Erfindung hat also erkannt, dass unter Berücksichtigung der LED-Spannung der erzeugte LED-Strom genauer definierbar ist.

Die Erfindung wird implementiert, indem zuerst für unterschiedliche Ströme durch die LED-Strecke die jeweilige Abhängigkeit des primärseitigen Stroms von der LED-Spannung, wie in Fig. 4 dargestellt, erfasst wird.

Es ergibt sich typischerweise bei dieser Messung, dass für sämtliche Soll-Ströme für den primärseitigen Strom sich in erster Nähe ein gleicher Kurvenverlauf ergibt.

Folgende Tabelle 1 zeigt für unterschiedliche Werte der LED-Spannung Vled den primärseitigen Stroms Inom, der erforderlich ist, um einen konstanten LED-Strom von 950 mA zu gewährleisten. Diese Werte sind auch in der entsprechenden Kurve in Fig. 4 dargelegt.

| Inom (mA) | Vled (V) | Inom_diff (mA) |
|-----------|----------|----------------|
| 120 | 55V | 0 |
| 110 | 50V | 6 |
| 100 | 27 V | 17 |

Die folgende Tabelle 2 zeigt den erforderlichen primärseitigen Stroms Inom zum Erreichen eines konstanten LED-Stroms von 1750 mA.

| Inom (mA) | Vled (V) | Inom_diff (mA) |
|-----------|----------|----------------|
| 160 | 34V | 0 |
| 158 | 28V | 1 |
| 157 | 20V | 2 |

Ähnliche Messungen werden für die anderen Werte des LED-Stroms durchgeführt.

Um die in Fig. 4 gezeigten unterschiedlichen Kurven vergleichen zu können, können diese Kurven in einem gemeinsamen Werte-Bereich angezeigt werden. Hierzu können die Kurven z.B. normiert werden. Erfindungsgemäß wird vorgeschlagen, für jeden gemessenen primärseitigen Strom Inom einen weiteren Wert Inom_diff wie folgt zu berechnen:

$$\text{Inom\_diff} = \text{Inom/max} - \text{Inom},$$

wobei Inom/max den Maximalwert des primärseitigen Strom Inom darstellt. Z.B. für einen LED-Strom von 950 mA ergibt sich aus Tabelle 1 ein Maximalwert Inom/max = 117 mA. Entsprechend gilt für die dritte Spalte der Tabelle 1 folgende Gleichung: Inom_diff = 117 - Inom.

Fig. 5 zeigt nunmehr den Verlauf dieses berechneten Werts Inom_diff in Abhängigkeit von der LED-Spannung Vled. Aus dieser Fig. 5 wird deutlich, wie ähnlich die Kurven sind.

Einerseits kann es vorgesehen sein, für verschiedene LED-Ströme den jeweiligen Verlauf des primärseitigen Stroms in Abhängigkeit von der LED-Spannung zu speichern, z.B. in einer in der primärseitigen Steuereinheit 9 abgespeicherten Look-Up-Tabelle bzw. Nachschlagtabelle oder Funktion. Z.B. könnte der Verlauf der in Fig. 4 gezeigten Kurven abgelegt sein.

Andererseits wird die Ähnlichkeit der in Fig. 4 und 5 gezeigten Kurven vorzugsweise dahingehend benutzt, dass z.B. durch eine softwaremäßig implementierte Look-Up-Tabelle auf der Primärseite nur noch ein einziger Kurvenverlauf abgelegt wird. Der abgelegte Kurvenverlauf betrifft vorzugsweise einen der vorgebaren LED-Stromwerte.

Eine mögliche Look-Up-Tabelle könnte beispielsweise einen einzigen Kurvenverlauf für den primärseitigen Strom in Abhängigkeit von der LED-Spannung aufweisen. Der Kurvenverlauf wird hier ausgehend von der jeweiligen gemessenen Kurve für den LED-Strom Iled = 950 mA und Iled = 1750 mA ausgewertet, d.h. ausgehend von der Kurve für den niedrigeren einstellbaren LED-Strom und für den maximalen einstellbaren LED-Strom.

Anhand dieser Look-Up-Tabelle kann für die gemessene Spannung Vled jeweils ein Wert Inom_Factor ausgelesen werden.

Der Wert der gemessenen LED Spannung Vled wird nunmehr um den entsprechenden Wert Inom_Factor korrigiert, beispielsweise mit diesem Wert multipliziert.

Für LED-Spannungswerte, die nicht in der Look-Up-Tabelle gespeichert sind, kann eine Interpolation durchgeführt werden, um den entsprechenden Wert Inom_Factor zu berechnen. Um solche Berechnungen bzw. Interpolationen zu vermeiden, kann die Look-Up-Tabelle z.B. auf 255 Werte für die LED-Spannung erweitert werden.

Abhängig von dem tatsächlich einzustellenden LED-Strom wird nunmehr der in der Look-Up-Tabelle gespeicherte Kurvenverlauf entsprechend modifiziert. Hierzu sind Verschiebungswerte V_offset, Inom_offset für jeden einzustellenden LED-Strom vorzugsweise in einer Tabelle abgelegt. Daraus ergibt sich der Kompensationswert für den primärseitigen Strom, abhängig von der gemessenen LED-Spannung.

Es kann z.B. für den einzustellenden LED-Strom 1050 mA der Kompensationswert Inom_Diff_calc berechnet werden. Aus einer weiteren Tabelle können zunächst die Verschiebungswerte V_offset und Inom_offset herausgelesen werden.

Somit ergibt sich für den einzustellenden LED-Strom 1050 mA z.B. einen Kompensationswert Inom_Diff_calc = 10 mA bei der LED-Spannung V_calc = 45,89 V.

Die Verschiebungswerte V_offset, Inom_offset der Tabelle werden somit auf die Werte der Look-Up-Tabelle angewendet, um für einen gewünschten LED-Strom auf Kompensationswerte Inom_Diff_calc für den Soll-Wert des primärseitigen Stroms bzw. auf den Zusammenhang zwischen Soll-Wert Inom für den primärseitigen Strom und LED-Spannung zu schließen.

Die für den einstellbaren LED-Strom 1050 mA berechneten Kompensationswerte Inom_Diff_calc sind beispielhaft in Fig. 7 gezeigt, s. dort die als "Calc" gekennzeichnete Kurve.

Für jeden einstellbaren LED-Strom sind zwei Verschiebungswerte V_offset, Inom_offset in der Tabelle abgelegt, wobei anhand dieser Verschiebungswerte der Verlauf der primärseitigen elektrischen Kenngröße abhängig von der LED-Spannung berechnet werden kann.

Erfindungsgemäß ist es entsprechend vorzugsweise vorgesehen, den Verlauf einer einzigen Kurve zu speichern, wobei diese Kurve derart für jeden einstellbaren LED-Strom repräsentativ ist, dass durch Verschiebung dieser gespeicherten Kurve den von der LED-Spannung abhängigen Soll-Wert Inom ableitbar ist.

Die Look-Up-Tabelle kann beliebig um weitere Dimensionen erweitert werden, so dass auch der Einfluss weiterer Größen - wie beispielsweise der Temperatur der LEDs bzw. der Umgebungstemperatur der LEDs - dadurch berücksichtigt werden kann, dass einmal eine Messung herstellerseitig ausgeführt wird und der gemessene Zusammenhang in einer weiteren Dimension der Look-Up-Tabelle abgelegt wird.

Alternativ zur Look-Up-Tabelle kann natürlich auch eine Funktion hinterlegt werden, so dass abhängig von der LED-Spannung, der Temperatur etc. entsprechend durch analytische Auswertung der primärseitige Strom entsprechend modifiziert wird. In diesem Fall ist der Zusammenhang zwischen dem primärseitigen Strom und den Größen, wie z.B. LED-Spannung und/oder Temperatur etc., mittels einer vorgegebenen Funktion definiert.

Wie bereits in Zusammenhang mit Fig. 1 gezeigt, kann also die LED-Spannung Vled über die galvanische Sperre zur Primärseite übertragen werden. Vorzugsweise gibt es keine Regelung auf der Sekundärseite. Zur Messung und Übertragung der Spannung über der LED-Strecke ist typischerweise eine integrierte Schaltung 8 in Form z.B. eines Microcontrollers auf der Sekundärseite vorgesehen, so dass dann die Übertragung beispielsweise in einem digitalen Protokoll über einen Optokoppler erfolgen kann.

Fig. 6 zeigt ein weiteres Ausführungsbeispiel eines LED-Konverters zur Versorgung einer LED-Strecke. In diesem Ausführungsbeispiel wird sowohl die Messung der primärseitigen elektrischen Kenngröße gezeigt, als auch die bereits in Fig. 1 gezeigte direkte oder indirekte Messung der LED-Spannung.

Der LED-Konverter entspricht grundsätzlich dem Ausführungsbeispiel der Fig. 2. Sekundärseitig wird die an der LED-Strecke anliegende Spannung Vled mittels eines Spannungsteilers RV1 und RV2 von einer sekundärseitig angeordneten Steuereinheit 8 gemessen. Die Steuereinheit 8 misst bzw. erfasst diese Spannung Vled und koppelt die Spannung Vled oder eine die gemessene Spannung wiedergebende Größe über einen Optokoppler 11 an die primärseitige Steuereinheit 9 zurück. Die Datenübertragung über die Rückkopplung 10 kann digital erfolgen, d.h. der Optokoppler 11 wird in diesem Fall gemäß einem digitalen Protokoll von der sekundärseitigen Steuereinheit 8 angesteuert.

Gemäß der Erfindung kann die LED-Spannung entweder direkt auf der Sekundärseite gemessen werden, sie kann aber auch indirekt beispielsweise durch elektrische Kenngrößen auf der Primärseite erfasst werden. Beispielsweise könnte der Zusammenhang zu der LED-Spannung durch Erfassung der primärseitigen Spannung hergestellt werden.

In diesem Fall wäre es nicht mehr notwendig, die LED-Streckenspannung sekundärseitig zu erfassen, so dass der genannte Microcontroller und die Übertragung dieser Information über die galvanische Sperre in Fortfall gelangen können.

Vorzugsweise werden die erfindungsgemäßen Messungen vom Hersteller des LED-Konverters durchgeführt. Ebenso werden die erfindungsgemäßen genannten Kurven bzw. werden die Look-Up-Tabelle und die weitere Tabelle vom Hersteller primärseitig vorzugsweise in der Steuereinheit 9 hinterlegt.

**Patentansprüche**

1. LED-Konverter zur Versorgung einer mindestens eine LED aufweisenden LED-Strecke mit Strom und Spannung, aufweisend:

   • einen Resonanzwandler (6) mit einem mindestens einen Schalter (LS, HS) aufweisenden Schaltregler,
   • eine galvanische Sperre (7), deren Primärseite (Lm) von dem Schaltregler versorgt wird und deren Sekundärseite (Lt) so angeordnet ist, dass sie der LED-Strecke direkt oder indirekt Strom zuführt, und
   • eine primärseitig angeordnete Steuereinheit (9) zum Erfassen einer primärseitigen elektrischen Kenngröße, wobei zum Erzeugen eines gewünschten LED-Stromwerts, d.h. eines gewünschten Stroms durch die LED-Strecke, die Steuereinheit (9) derart ausgestaltet ist, die erfasste primärseitige elektrische Kenngröße, durch Steuerung des Schaltreglers, auf einen Soll-Wert zu regeln,
   • wobei die primärseitige elektrische Kenngröße ein primärseitiger Strom ist, **gekennzeichnet dadurch,**
   • **dass** die Steuereinheit (9) derart ausgestaltet ist, primärseitig, mittels einer Spannungsmessung, eine LED-Spannung indirekt zu erfassen, wobei eine Abhängigkeit der primärseitigen elektrischen Kenngröße von der LED-Spannung zur Erreichung des gewünschten LED-Stromwert in der Steuereinheit (9) hinterlegt ist, wobei die Steuereinheit (9) derart ausgestaltet ist, den Soll-Wert für die primärseitige elektrische Kenngröße abhängig von dem gewünschten LED-Stromwert und von der primärseitig indirekt erfassten LED-Spannung einzustellen.

2. LED-Konverter gemäß Anspruch 1, wobei die Abhängigkeit in einer Look-Up-Tabelle bzw. Nachschlagtabelle abgespeichert ist oder gemäß einer Funktion hinterlegt ist.

3. LED-Konverter gemäß Anspruch 2, wobei der Soll-Wert für die erfasste primärseitige elektrische Kenngröße zusätzlich abhängig von mindestens einer weiteren Größe ist.

4. LED-Konverter gemäß Anspruch 3, wobei diese zusätzliche Abhängigkeit ebenfalls in der Look-Up-Tabelle abgespeichert ist oder gemäß der Funktion hinterlegt ist.

5. LED-Konverter gemäß Anspruch 1, wobei für unterschiedliche einstellbare gewünschte LED-Stromwerte ein entsprechender Kurvenverlauf der primärseitigen elektrischen Kenngröße in Abhängigkeit von der primärseitig indirekt erfassten LED-Spannung abgespeichert ist.

6. LED-Konverter gemäß gemäß Anspruch 1, wobei für mehrere einstellbare gewünschte LED-Stromwerte ein einziger Verlauf der primärseitigen elektrischen Kenngröße in Abhängigkeit von der primärseitig indirekt erfassten LED-Spannung abgespeichert ist, und wobei für jeden dieser mehreren einstellbaren gewünschte LED-Stromwerte Verschiebungswerte (V_offset, Inom_offset), die zum Ableiten eines Kompensationswerts (Inom_Diff_calc) für die primärseitige elektrische Kenngröße dienen, gespeichert sind.

7. LED-Konverter gemäß einer der vorigen Ansprüche, wobei die Steuereinheit derart ausgestaltet ist, die primärseitig indirekt erfasste LED-Spannung durch Messung entweder einer Spannung aus dem Resonanzwandler (6) oder eine Spannung an der Primärseite der galvanischen Sperre (7) zu erfassen.

8. Verfahren zur Versorgung einer mindestens eine LED aufweisenden LED-Strecke mit Strom und Spannung entsprechend Anspruch 1, wobei das Verfahren die folgenden Schritte aufweist:

   • Erfassung der primärseitigen elektrischen Kenngröße durch die Steuereinheit (9),
   • Regelung der erfassten primärseitigen elektrische Kenngröße auf den Soll-Wert durch Steuerung des Schaltreglers von der Steuereinheit (9), um den gewünschten LED-Stromwert, d.h. der gewünschte Strom durch die LED-Strecke, zu erzeugen,

   **gekennzeichnet durch**

   • primärseitig indirekte Erfassung der LED-Spannung, mittels einer Spannungsmessung, **durch** die Steuereinheit (9), wobei die Abhängigkeit der primärseitigen elektrischen Kenngröße von der LED-Spannung zur Erreichung des gewünschten LED-Stromwert in der Steuereinheit (9) hinterlegt ist, und

• Einstellen des Soll-Werts für die primärseitige elektrische Kenngröße in Abhängigkeit von dem gewünschten LED-Stromwert und von der primärseitig indirekt erfassten LED-Spannung **durch** die Steuereinheit (9).

9. Computersoftware-Programmprodukt, das ein Verfahren nach Anspruch 8 ausführt, wenn es in einer Recheneinrichtung läuft.

10. Integrierte Schaltung, insbesondere ASIC oder Microcontroller oder eine Hybridversion davon, die zur Ausführung eines Verfahrens nach Anspruch 8 ausgebildet ist.

11. Leuchte, aufweisend eine LED-Strecke und einen LED-Konverter gemäß einem der Ansprüche 1 bis 7 zur Versorgung der LED-Strecke mit Strom.

**Claims**

1. An LED converter for supplying current and voltage to an LED series having at least one LED, having:

   • A resonant converter (6) with a switch regulator which has at least one switch (LS, HS),
   • a galvanic block, the primary side (Lm) of which is supplied by the switch regulator and the secondary side (Lt) of which is arranged so as to supply a current directly or indirectly to the LED series, and
   • a control unit (9) arranged on the primary side for detecting a primary-side electric parameter, wherein the control unit (9) is designed in such a manner as to regulate the detected primary-side electric parameter to a desired value in order to generate a desired LED current value, i.e. a desired current through the LED series, by controlling the switch regulator,
   • wherein the primary-side electric parameter is a primary-side current, **characterized in**
   • **that** the control unit (9) is designed in such a manner as to detect an LED voltage indirectly on the primary side by means of a voltage measurement, wherein a dependence of the primary-side electrical parameter on the LED voltage for achieving the desired LED current value is stored in the control unit (9), wherein the control unit (9) is designed in such a manner as to adjust the desired value for the primary-side electrical parameter dependent on the desired LED current value and on the LED voltage indirectly detected on the primary side.

2. An LED converter according to Claim 1, wherein the dependence is stored in a look-up table or is stored according to a function.

3. An LED converter according to Claim 2, wherein the desired value for the detected primary-side electrical parameter is additionally dependent on at least one further parameter.

4. An LED converter according to Claim 3, wherein this additional dependence is also stored in the look-up table or stored according to the function.

5. An LED converter according to Claim 1, wherein for different adjustable desired LED current values a corresponding curve progression of the primary electrical parameter is stored in dependence on the primary indirectly detected voltage.

6. An LED converter according to Claim 1, wherein for several adjustable desired LED current values a single progression is stored of the primary-side electrical parameter in dependence on the primary-side indirectly detected LED voltage, and wherein for each of these several adjustable desired LED current values displacement values (V_offset, Inom_offset), are stored, which serve for the derivation of a compensation value (Inom_Diff_calc) for the primary-side electrical parameter.

7. An LED converter according to any one of the preceding claims, wherein the control unit is designed in such a manner as to detect the primary-side indirectly detected LED voltage by measurement either of the voltage from the resonant converter (6) or a voltage on the primary side of the galvanic barrier (7).

8. A method for supplying an LED series having at least one LED with current and voltage according to Claim 1, wherein the method has the following steps:

   • Detection of the primary-side electrical parameter by the control unit (9),

• regulation of the detected primary side electrical parameter to the desired value by controlling the switch regulator of the control unit (9), in order to generate the desired LED current value, i.e., the desired current through the LED series,

**characterized by**

• primary-side indirect detection of the LED voltage, by means of a voltage measurement, by the control unit (9), wherein the dependence of the primary-side electrical parameter on the LED voltage for achieving the desired LED current value is stored in the control unit (9), and

• adjustment of the desired value for the primary-side electrical parameter in dependence on the desired LED current value and on the primary-side indirectly detected LED voltage by the control unit (9).

9. A computer software program product, which carries out a method according to Claim 8, if it runs in a computing device.

10. An integrated circuit, in particular, an ASIC or microcontroller or a hybrid version thereof, which is designed for carrying out a method according to Claim 8.

11. A luminaire, having an LED series and an LED converter according to any one of Claims 1 to 7 for supplying the LED series with current.

**Revendications**

1. Convertisseur LED destiné à l'alimentation en intensité et en tension d'une barre de LED comportant au moins une LED, comportant :

• un convertisseur à résonance (6) avec un régulateur à découpage comportant au moins un commutateur (LS, HS),

• une barrière galvanique (7), dont le côté primaire (Lm) est alimenté par le régulateur à découpage et dont le côté secondaire (Lt) est disposé de telle sorte qu'il conduit l'intensité directement ou indirectement à la barre de LED, et

• une unité de commande (9) disposée côté primaire destinée à la détection d'une grandeur caractéristique électrique côté primaire, l'unité de commande (9) étant, pour la production d'une valeur d'intensité de LED souhaitée, c'est-à-dire d'une intensité souhaitée à travers la barre de LED, constituée de manière à, par la commande du régulateur à découpage, réguler à une valeur de consigne la grandeur caractéristique électrique côté primaire détectée,

• la grandeur caractéristique électrique côté primaire étant une intensité côté primaire, **caractérisé en ce que**

• l'unité de commande (9) est constituée pour, côté primaire, au moyen d'une mesure de la tension, détecter indirectement une tension de LED, une dépendance de la grandeur caractéristique électrique côté primaire vis-à-vis de la tension de LED pour l'obtention de la valeur d'intensité de LED souhaitée étant enregistrée dans l'unité de commande (9), l'unité de commande (9) étant constituée pour régler la valeur de consigne pour la grandeur caractéristique électrique côté primaire en fonction de la valeur d'intensité de LED souhaitée et de la tension de LED détectée indirectement côté primaire.

2. Convertisseur LED selon la revendication 1, la dépendance étant enregistrée dans une table de recherche ou respectivement une table de référence, ou étant consignée conformément à une fonction.

3. Convertisseur LED selon la revendication 2, la valeur de consigne pour la grandeur caractéristique électrique côté primaire détectée étant en plus fonction d'au moins une autre grandeur.

4. Convertisseur LED selon la revendication 3, cette dépendance supplémentaire étant également enregistrée dans la table de recherche ou étant consignée conformément à la fonction.

5. Convertisseur LED selon la revendication 1, une allure de courbe correspondante de la grandeur caractéristique électrique côté primaire étant, pour différentes valeurs d'intensité de LED souhaitées réglables, enregistrée en fonction de la tension de LED détectée indirectement côté primaire.

6. Convertisseur LED selon la revendication 1, une allure unique de la grandeur caractéristique électrique côté primaire étant, pour plusieurs valeurs d'intensité de LED souhaitées réglables, enregistrée en fonction de la tension de LED détectée indirectement côté primaire, et des valeurs de décalage (V_offset, Inom_offset) qui servent à dériver une valeur de compensation (Inom_Diff_calc) pour la grandeur caractéristique électrique côté primaire étant enregistrées pour chacune de ces plusieurs valeurs d'intensité de LED souhaitées réglables.

7. Convertisseur LED selon l'une des revendications précédentes, l'unité de commande étant constituée a détecter la tension de LED détectée indirectement côté primaire par la mesure soit d'une tension en provenance du convertisseur à résonance (6), soit une tension sur le côté primaire de la barrière galvanique (7).

8. Procédé destiné à l'alimentation en intensité et en tension d'une barre de LED comportant au moins une LED selon la revendication 1, le procédé comportant les étapes suivantes :

• détection de la grandeur caractéristique électrique côté primaire par l'unité de commande (9),
• régulation de la grandeur caractéristique électrique côté primaire détectée à la valeur de consigne par la commande du régulateur à découpage de l'unité de commande (9) pour produire la valeur d'intensité de LED souhaitée, c'est-à-dire l'intensité souhaitée à travers la barre de LED,
**caractérisé par**
• une détection indirecte côté primaire de la tension de LED, au moyen d'une mesure de tension, par l'unité de commande (9), la dépendance de la grandeur caractéristique électrique côté primaire vis-à-vis de la tension de LED pour l'obtention de la valeur d'intensité de LED souhaitée étant consignée dans l'unité de commande (9), et
• réglage de la valeur de consigne pour la grandeur caractéristique électrique côté primaire en fonction de la valeur d'intensité de LED souhaitée et de la tension de LED détectée indirectement côté primaire par l'unité de commande (9) .

9. Produit de programme de logiciel informatique qui réalise un procédé selon la revendication 8 quand il est exécuté dans une installation de calcul.

10. Circuit intégré, en particulier ASIC ou microcontrôleur ou une version hybride de ceux-ci, qui est constitué pour la réalisation d'un procédé selon la revendication 8.

11. Luminaire, comportant une barre de LED et un convertisseur LED selon l'une des revendications 1 à 7 pour l'alimentation en intensité de la barre de LED.

Fig. 1

**Fig. 2**

**Fig. 3**

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2010031244 A1
- US 20110080102 A1
- WO 2011008635 A1
- EP 2252133 A2
- US 20080112193 A1
- US 20090059632 A1
- EP 2741409 A2
- WO 2013152368 A1
- WO 2013152367 A2
- WO 2014152367 A2

**In der Beschreibung aufgeführte Nicht-Patentliteratur**

- AN-9729 LED Application Design Guide Using Half-Bridge LLC Resonant Converter for 100W Street Lighting. Internet-Seite Fairschild. 16. November 2012, 1-14